# EUROPEAN PATENT SPECIFICATION

(11) **EP 2 579 721 B1**
(45) Date of publication and mention of the grant of the patent: **03.08.2016**
(21) Application number: 11726207.1
(22) Date of filing: 06.06.2011
(51) Int. Cl.: A01N 53/00, A01N 25/10, A01N 25/18, A01N 25/34, A01P 7/04

(54) **METHOD FOR THE SUSTAINED RELEASE OF AN INSECTICIDALLY ACTIVE COMPOUND**
VERFAHREN ZUR LANGANHALTENDEN FREISETZUNG EINER INSEKTIZIDEN VERBINDUNG
PROCÉDÉ POUR LA LIBÉRATION PROLONGÉE D'UN COMPOSÉ ACTIF CONTRE LES INSECTES

(30) Priority: 08.06.2010 EP 10165235
(43) Date of publication of application: 17.04.2013
(73) Proprietor: S.C.JOHNSON & SON, INC., Racine, WI 53403 (US)
(72) Inventor: MONSONIS GÜELL, Eduard, E-08023 Barcelona (ES); CORTÈS BAREA, Jordi, E-08203 Sabadell (ES); SALMONS CREUS, Flors, E-08036 Barcelona (ES)
(74) Representative: V.O.
(86) International application number: PCT/NL2011/050398
(87) International publication number: WO 2011/155823

(56) References cited:
- EP-A2- 1 825 748
- WO-A1-00/67574
- GB-A- 2 070 933
- GB-A- 2 407 770
- US-A- 6 031 967
- US-A- 6 074 656
- EXXONMOBIL: "Norpar 12 Fluid - Material Safety Data Sheet", , [Online] 15 September 2000 (2000-09-15), pages 1-7, XP002603929, Exxon Mobil Corporation, ExxonMobil Lubricants & Petroleum Specialties Retrieved from the Internet: URL:http://ilrc.ucf.edu/documents/ILRC%200 0000077/MSDS%2000000077.pdf> [retrieved on 2010-10-06]
- EXXONMOBIL: "Isopar N - Safety Data Sheet", , [Online] 8 July 2009 (2009-07-08), pages 1-9, XP002603914, Exxon Mobil Corporation, Retrieved from the Internet: URL:http://www.msds.exxonmobil.com/psims/A lternateFormat.aspx?Brand=xomcc&DocumentID =649307&DocumentFormat=RTF> [retrieved on 2010-10-06]
- F. B. Silbermann GmbH & Co. KG: "Isopar M - Sicherheitsdatenblatt", , 17 November 2008 (2008-11-17), pages 1-6, XP002647089, Retrieved from the Internet: URL:http://www.silbermann.de/download/SDB/ 04557030.pdf [retrieved on 2011-07-04]

## Description

### Field of the invention

The invention pertains to a heating method, involving the use of a heater, for prolonging the release of an insecticidal active agent, and to a method of combating insects.

### Background of the invention

In the sustained release of insecticides it is desired to provide compositions that exert a long duration of action, preferably while providing a period of at least one week, and more preferably several weeks, of constant release of the insecticide. Depending on the composition, the insecticide is released by its natural evaporation. This is the case, e.g., with insecticide-impregnated papers and the like. Other insecticide-releasing compositions are suitable for use in devices that cause the insecticide to evaporate by the application of energy, such as heat, by a man-made device, such as a heater. An advantage of the latter, is a higher safety of the insecticidal composition than in the case of compositions from which the insecticide evaporates spontaneously. Moreover, a better control of the evaporation can be attained, and generally a higher efficacy.

The present invention is specifically concerned with the release of insecticide from a cellulosic composition that is heated by a heater. Throughout the description of the invention, the term "heating" should be understood as relating to heating by the input of a man-made device, viz. a heater, as opposed to ambient emanation.

A problem with the sustained release of insecticides from cellulosic compositions under heating, is that the duration of action is generally too short, e.g. several hours instead of at least several days. The invention seeks to obviate this problem. For completeness' sake, it is noted that heated devices that use liquid formulations / refills usually last for 360h, 480h or even more and they have sustained release. These have drawbacks, such as leakage problems, and causing more waste. This invention seeks to provide much longer duration for electrical devices using solid refills made of cellulose. They have big advantages against liquid formulations for electrical devices: whilst they then would show the same performance, this would be without the leakage associated with liquid refills, without the evaporation of solvents, less waste, less plastic used.

In the art, several attempts have been disclosed to increase the duration of action of insecticides in circumstances, using solid cellulosic compositions, where the release is controlled by heating.

In most cases the systems appearing in the art are designed to work in the standard electrical devices used for the evaporation of active ingredients from solid supports (generally cellulosic). These devices work at high temperatures of higher than approximately 130°C. Attempts in the art try to compensate the high temperature of those devices by several means. These attempts generally go with relatively complex measures in order to prevent untimely release.

E.g., US 2004/247651 provides an impermeable layer with apertures on top of an impregnated substrate; References such as US 6,031,967 and US 2002/192123 adapt the shape of carrier members so as to provide more moderate heating and/or a temperature step-down. US 6,309,986 provides a metal layer so as to cause a temperature step-down. EP1825748 provides a substrate comprising granular particles adhered together to form a body having a network of pores and passages. GB 2070933 provides a device consisting of juxtaposed solid compositions each containing a substance with an action against insects which is absorbed in an absortive bulk material. US 6,074,656 relates to a fibrous mat comprising an insecticide, and seeks to prolong the action of the mat by combined measures relating to the area of the mat and that of the radiation plate in the heating device in which the mat is placed. Whilst some prolongation of the action results, this is of the order of five days, and at a relatively high dosage of insecticidal active agent.

The invention seeks to provide a method by which a longer duration of action can be obtained in a more simple and straightforward manner. The invention also seeks to provide a further prolonged action, and preferably on the basis of a reduced amount of active agent.

### Summary of the invention

In order to better address one or more of the foregoing objectives, the invention, in one aspect, provides a method for effecting the sustained release of an insecticidal active agent, comprising providing a cellulosic dosage unit that comprises an insecticidal active substance, and heating the dosage unit by means of a heater so as to release the active substance, wherein the dosage unit is heated at a temperature within the range of from 60°C to 95°C, and wherein the active substance is selected from the group consisting of transfluthrin, metofluthrin, and mixtures thereof, and wherein the dosage unit is in the form of a mat.

The invention also relates to a method of combating insects comprising providing a cellulosic dosage unit that comprises an insecticidal active substance selected from the group consisting of transfluthrin, metofluthrin, and mixtures thereof, and heating the dosage unit by means of a heater so as to evaporate the active substance into the environment, wherein the evaporation is effected at a temperature within the range of from 60°C to 95°C, and wherein the dosage unit is in the form of a mat.

In yet another aspect, the invention pertains to the use of an electrical insecticide heater so as to release an insecticide from a dosage unit into an environment, wherein the dosage unit is a cellulosic dosage unit that comprises an insecticidal active substance selected from the group consisting of transfluthrin, metofluthrin, and mixtures thereof, and wherein the heating is conducted at a temperature selected within the range of from 60°C to 95°C, said selected temperature being for the purpose of prolonging the action of the insecticide to at least a week, and combating insects in an environment, wherein the dosage unit is in the form of a mat.

### Detailed description of the invention

In a general sense, the invention is based on a judicious combination of conditions given by the selection of the insecticidal active agents, the carrier materials, and the heating temperature applied by the heater. Within the conditions set by the invention, a prolonged duration of action can be obtained in a surprising manner, and at a level beyond the skilled person's regular expectations.

Said level can be viewed in terms of the duration *per se,* which can be as long as more than one week, typically two to five weeks, e.g. of the order of one month, and even up to six weeks. Said level can also be viewed in terms of a combination of duration and the concentration of the active agent, i.e. a duration of several days to a week, at about one tenth of the concentrations as used in the art. Additionally the lower temperatures used compared to the art for long lasting systems, avoid degradation of active ingredients along the working life of the product, avoiding then using a high initial quantity of active ingredient to compensate partial degradation along time.

The insecticidal active agents suitable for use in the present invention are transfluthrin and metofluthrin. Combinations of these agents can also be used. Transfluthrin is preferred. These active agents are known to the skilled person.

The insecticide according to the invention is comprised in a cellulosic dosage unit. Such a dosage unit, comprising cellulose and preferably consisting essentially of cellulose, comes in the form of a flat tablet, also referred to in the art as a "mat." Such mats typically have dimensions approximately of around 35mm x 22mm x 2.5mm. The mats of the invention preferably have surface areas within the range of from 1 to 10 cm², more preferably 3.5 to 7 cm².The invention is not limited to rectangular flat materials, as the tablets can also be round (i.e., preferably having a substantially round circumference), square or of circumferential shape. The dosage units of the invention can be made by providing pre-existing, commercially available cellulose paper (typically from a roll), and impregnating the paper with the insecticide. For the impregnation the insecticide is generally contained in a solvent. Solvents for transfluthrin and metofluthrin are known. Preferred solvents are: hydrocarbons, glycols, isoparaffins.

The insecticide is preferably mixed with the cellulosic material while in a liquid state. Impregnation will then take place at an elevated temperature of e.g. 35-40°C in order to make it faster.

The amount of insecticide comprised in the dosage unit can be varied as desired and will depend on the cellulose used, the active ingredient used and the duration chosen. Generally, the insecticide will be present in a weight percentage from 5% to 70% preferably 30% to 50%.

In a preferred embodiment, a dye is present. A problem associated with sustained-release insecticide compositions using a solid support as cellulose is to make it visible when the composition is no longer active. The longer the duration of the sustained release (in terms of active life), the greater this problem is. E.g. daily replacement would be a simple routine for a user. The need for replacement after several weeks, however, would be more easily missed. Therefore, a dye is preferably dissolved with the insecticide when impregnating the cellulosic material, and will thus lend color to the insecticide composition. Both the insecticide and the dye will evaporate with the solvent, and a fading (and ultimately disappearing) color will automatically coincide with the disappearance of the insecticide from the composition.

Suitable dyes include solvent Green 3, Solvent Blue 35, Solvent Yellow 18, Solvent Red 1, Solvent Yellow 33, Solvent Violet 13, Solvent Violet 37, Solvent Blue 26, Solvent Violet 14, Solvent Blue 104, Solvent Violet 3, and mixtures thereof.

The dosage unit according to the invention is put to use by the action of heat provided by a heater. The heating is preferably conducted in an electrical diffuser with the appropriate low temperature of standard technology available in the art. The heater will normally operate based on electrical current, which can be provided by one or more batteries, but preferably and more conveniently just can be plugged directly into an AC socket (e.g. 230V). Electrical diffusers, emanators, and the like are known in the art, and do not require elucidation here. These electrical devices are generally composed by a flat heater where the cellulosic refill containing the active is placed.

Different from the normal heating, which can be at e.g. 130°C (usually 140-150°C), the heating in the invention is done at a temperature within the range of from 60°C to 95°C. The temperature referred to is that at the surface of the cellulosic dosage unit. Preferably, the temperature is 70°C to 85°C in the case of transfluthrin. In the case of metofluthrin, the preferred temperatures are lower, i.e. preferably 60°C to 70°C.

The invention is illustrated hereinafter with reference to the Examples.

### Example 1

Cellulosic tablet of 4 cm² and 3.8 mm thickness is impregnated with Transfluthrin (0.4g), 20% of mineral oil (CAS# 31-75-6) and 0.08% of dye (Solvent blue 35). The tablet is evaporated in an electrical diffuser with the heater at 80-85°C showing a stable release rate of transfluthrin for 730h. The study is repeated without mineral oil and the duration is the same.

### Example 2

Cellulosic tablet of 6.3 cm² and 2.5 mm thickness is impregnated with Transfluthrin (0.1g), 20% of hydrocarbon solvent (CAS# 64742-47-8) and 0.006% of dye (Solvent blue 35). The tablet is evaporated in an electrical diffuser with the heater at 75-80°C showing a stable release rate of transfluthrin for 100h.

This study is also made with other solvents (CAS#110-27-0, CAS#142-91-6) and the release rate and duration are the same.

### Example 3

Cellulosic tablet of 4 cm² and 5.8 mm thickness is impregnated with Transfluthrin (0.45g), 10% of mineral oil (CAS# 31-75-6) and 0.05% of dye (Solvent blue 35). The tablet is evaporated in an electrical diffuser with the heater at 85-95°C showing a stable release rate of transfluthrin for 500h.

### Example 4

Cellulosic tablet of 4 cm² and 3.8 mm thickness is impregnated with Transfluthrin (0.23g), 5% of mineral oil (CAS# 31-75-6), 5% of BHT (butyl hydroxy toluene) and 0.04% of dye (Solvent blue 35). The tablet is evaporated in a electrical diffuser with the heater at 80-85°C showing a stable release rate of transfluthrin for 400h.

This study is also made without BHT and the release rate and duration are the same.

### Example 5

Cellulosic tablet of 4 cm² and 2.1 mm thickness is impregnated with Transfluthrin (0.44g), and 0.08% of dye (Solvent blue 35).

The tablet is evaporated in a electrical diffuser with the heater at 75-80°C showing a stable release rate of transfluthrin for 800h.

This study is also made with the same configuration but with a heater temperature of 70-75°C, showing a duration of 1100h.

### Example 6

Cellulosic tablet of 6.3 cm² and 2.5 mm thickness is impregnated with Metofluthrin (0.03g), 0% of hydrocarbon solvent (CAS# 64742-47-8) and 0.006% of dye (Solvent blue 35). The tablet is evaporated in a electrical diffuser with the heater at 60-65°C showing a stable release rate of metofluthrin for 120h.

## Claims

1. A method for prolonging the release of an insecticidal active agent and of combating insects in an environment, comprising providing a cellulosic dosage unit that comprises an insecticidal active substance selected from the group consisting of transfluthrin, metofluthrin, and mixtures thereof, and heating the dosage unit, by means of a heater, so as to evaporate the active substance into the environment, wherein the evaporation is effected at a temperature within the range of from 60°C to 95°C, and wherein the dosage unit is in the form of a mat.

2. A method according to claim 1, wherein the mat has a surface area within the range of from 1 to 10 cm2.

3. A method according any one of the preceding claims, wherein the heater is an electric powered heater.

4. A method according to any one of the preceding claims, wherein the active substance is transfluthrin, and the heating is conducted at a temperature within the range of from 70°C to 95°C.

5. A method according to any one of claims 1-3, wherein the active substance is metofluthrin, and the heating is conducted at a temperature within the range of from 60°C to 75°C.

6. A method according to any one of the preceding claims, wherein the dosage unit comprises a dye.

7. The use of an electrical insecticide heater so as to release an insecticide from a dosage unit into an environment, wherein the dosage unit is a cellulosic dosage unit that comprises an insecticidal active substance selected from the group consisting of transfluthrin, metofluthrin, and mixtures thereof, and wherein the heating is conducted at a temperature selected within the range of from 60°C to 95°C, said selected temperature being for the purpose of prolonging the action of the insecticide to at least a week and combating insects in an environment wherein the dosage unit is in the form of a mat.

8. A use according to claim 7, wherein the mat has a surface area within the range of from 1 to 10 cm².

9. A use according to any one of the claims 7 to 8, wherein the active substance is transfluthrin, and the heating is conducted at a temperature within the range of from 70°C to 95°C.

10. A use according to any one of the claims 7 to 8, wherein the active substance is metofluthrin, and the heating is conducted at a temperature within the range of from 60°C to 75°C.

## Patentansprüche

1. Verfahren zur Verlängerung der Freisetzung eines insektiziden wirksamen Mittels und zur Bekämpfung von Insekten in einer Umgebung, umfassend Bereitstellen einer Zellulose- Dosierungseinheit, die eine insektizide wirksame Substanz umfasst, ausgewählt aus der Gruppe bestehend aus Transfluthrin, Metofluthrin und Gemischen davon, und Erhitzen der Dosierungseinheit mittels einer Heizvorrichtung, damit die wirksame Substanz in die Umgebung verdampft, wobei die Verdampfung bei einer Temperatur innerhalb des Bereichs von 60 °C bis 95 °C erfolgt und wobei die Dosierungseinheit in der Form einer Matte vorliegt.

2. Verfahren nach Anspruch 1, wobei die Matte einen Oberflächenbereich innerhalb des Bereichs von 1 bis 10 cm² hat.

3. Verfahren nach einem der vorhergehenden Ansprüche, wobei die Heizvorrichtung eine elektrisch betriebene Heizvorrichtung ist.

4. Verfahren nach einem der vorhergehenden Ansprüche, wobei die wirksame Substanz Transfluthrin ist und das Erhitzen bei einer Temperatur innerhalb des Bereichs von 70 °C bis 95 °C durchgeführt wird.

5. Verfahren nach einem der Ansprüche 1-3, wobei die wirksame Substanz Metofluthrin ist und das Erhitzen bei einer Temperatur innerhalb des Bereichs von 60 °C bis 75 °C durchgeführt wird.

6. Verfahren nach einem der vorhergehenden Ansprüche, wobei die Dosierungseinheit einen Farbstoff umfasst.

7. Verwendung einer elektrischen Insektizidheizvorrichtung, um ein Insektizid aus einer Dosierungseinheit in eine Umgebung freizusetzen, wobei die Dosierungseinheit eine Zellulose- Dosierungseinheit ist, die eine insektizide wirksame Substanz umfasst, ausgewählt aus der Gruppe bestehend aus Transfluthrin, Metofluthrin und Gemischen davon, und wobei das Erhitzen bei einer Temperatur durchgeführt wird, ausgewählt innerhalb des Bereichs von 60 °C bis 95 °C, wobei die ausgewählte Temperatur dem Zweck dient, die Wirkung des Insektizids auf mindestens eine Woche zu verlängern und Insekten in einer Umgebung zu bekämpfen, wobei die Dosierungseinheit in der Form einer Matte vorliegt.

8. Verwendung nach Anspruch 7, wobei die Matte einen Oberflächenbereich innerhalb des Bereichs von 1 bis 10 cm² hat.

9. Verwendung nach einem der Ansprüche 7 bis 8, wobei die wirksame Substanz Transfluthrin ist und das Erhitzen bei einer Temperatur innerhalb des Bereichs von 70 °C bis 95 °C durchgeführt wird.

10. Verwendung nach einem der Ansprüche 7 bis 8, wobei die wirksame Substanz Metofluthrin ist und das Erhitzen bei einer Temperatur innerhalb des Bereichs von 60 °C bis 75 °C durchgeführt wird.

## Revendications

1. Un procédé pour prolonger la libération d'un agent actif insecticide, et de combattre les insectes dans un environnement comprenant la fourniture d'une unité de dosage cellulosique qui comprend une substance insecticide active choisie dans le groupe constitué par la transfluthrine, la métofluthrine et des mélanges de ceux-ci, et comprenant le chauffage de l'unité de dosage à l'aide d'un réchauffeur de manière à libérer la substance active, dans lequel l'unité de dosage est chauffée à une température comprise dans l'intervalle allant de 60°C à 95°C et dans lequel la dose unitaire se présente sous la forme d'un mat.

2. Un procédé selon la revendication 1, dans lequel le mat présente une aire superficielle comprise dans l'intervalle de 1 à 10 cm².

3. Un procédé selon l'une quelconque des revendications précédentes, dans lequel le réchauffeur est un réchauffeur fonctionnant à l'électricité.

4. Un procédé selon l'une quelconque des revendications précédentes, dans lequel la substance active est la transfluthrine et le chauffage est réalisé à une température comprise dans l'intervalle allant de 70°C à 95°C.

5. Un procédé selon l'une quelconque des revendications 1 à 3, dans lequel la substance active est la métofluthrine, et le chauffage est effectué à une température comprise dans l'intervalle allant de 60°C à 75°C.

6. Un procédé selon l'une quelconque des revendications précédentes, dans lequel l'unité de dosage comprend un colorant.

7. L'utilisation d'un réchauffeur électrique d'un insecticide de manière à libérer un insecticide à partir d'une unité de dosage dans un environnement, dans lequel l'unité de dosage est une unité de dosage cellulosique qui comprend une substance insecticide active choisie dans le groupe constitué par la transfluthrine, la métofluthrine et des mélanges de ceux-ci, et dans lequel le chauffage est effectué à une température choisie dans l'intervalle allant de 60°C à 95°C, ladite température choisie ayant pour objectif de prolonger l'action de l'insecticide d'au moins une semaine et de combattre les insectes dans un environnement dans lequel l'unité de dosage est sous forme d'un mat.

8. Utilisation selon la revendication 7, dans laquelle le mat présente une aire superficielle comprise dans l'intervalle de 1 à 10 cm².

9. Utilisation selon l'une quelconque des revendications 7 ou 8, dans laquelle la substance active est la transfluthrine et le chauffage est réalisé à une température comprise dans l'intervalle allant de 70°C à 95°C.

10. Utilisation selon l'une quelconque des revendications 7 ou 8, dans laquelle la substance active est la métofluthrine, et le chauffage est effectué à une température comprise dans l'intervalle allant de 60°C à 75°C.
